# EUROPEAN PATENT SPECIFICATION

(11) **EP 2 284 928 B1**
(45) Date of publication and mention of the grant of the patent: **16.09.2015**
(21) Application number: 10251440.3
(22) Date of filing: 12.08.2010
(51) Int. Cl.: H01M 2/10, H01M 2/20, H01M 10/613, H01M 10/643, H01M 10/6557, H01M 10/6562, H01M 10/6563

(54) **Battery pack with improved heat dissipation efficiency**
Batteriepack mit verbesserter Wärmeableitungseffizienz
Bloc batterie doté d'une meilleure efficacité de la dissipation de chaleur

(30) Priority: 12.08.2009 US 233296; 29.06.2010 US 826437 P
(43) Date of publication of application: 16.02.2011
(73) Proprietor: Samsung SDI Co., Ltd., Yongin-si, Gyeonggi-do (KR)
(72) Inventor: Kwang, No-Hyun, Seocho-Gu Seoul 137-875 (KR); Seo, Kyung-Won, Yongin-si Gyeonggi-do (KR); Byun, Jeong-Deok, Yongin-si Gyeonggi-do (KR); Doh, Watson, Seoul 137-875 (KR); Jin-Hong An, Yongin-si Gyeonggi-do (KR); Han, Jung-Yub, Seoul 137-875 (KR)
(74) Representative: Mounteney, Simon James

(56) References cited:
- WO-A1-2007/066919
- WO-A1-2007/075019
- WO-A1-2008/018714

## Description

### BACKGROUND

### 1. Field

The present invention relates to a battery pack, and more particularly, to a battery pack with improved heat dissipation efficiency.

WO 2007/075019 discloses a frame member including an upper frame member having one major surface to which a protection circuit module (PCM) is mounted, and a lower frame member coupled with the upper frame member, the upper and lower frame members being provided at opposite major surfaces thereof with semi-cylindrical battery receiving parts corresponding to outer surfaces of the cylindrical unit cells mounted between the upper and lower frame members, a spacer provided at opposite major surfaces of a rectangular frame with pluralities of semi-cylindrical battery receiving parts corresponding to outer surfaces of the cylindrical batteries, the battery receiving parts being partially open such that the battery receiving parts communicate with neighboring battery receiving parts on the same plane, and a battery pack including the frame member and the spacer.

WO 2008/018714 discloses a pack case constructed in a structure in which a plurality of battery cells are mounted in the pack case to electrically connect the battery cells with each other, wherein the pack case includes an upper case and a lower case constructed in a hollow structure in which the upper case and the lower case are coupled with each other while the battery cells are mounted between the upper case and the lower case, each case is integrally provided at the inner part thereof with a plurality of spacers for supporting the battery cells, and each case is provided at the outer part thereof with a plurality of ventilation openings which communicate with the interior of each case, and a battery pack including the pack case. The pack case according to the present invention has effects in that a plurality of battery cells are stably mounted in the pack case in a compact structure through a simple assembly process, heat generated from the battery cells is effectively removed during the charge and discharge of the battery cells, and an additional safety unit, such as a detection member and/or a protection circuit module, is easily mounted to the pack case.

### 2. Description of the Related Art

As technology of mobile devices has been remarkably developed and the demand for mobile devices increases, the demand for secondary batteries as an energy source is rapidly increased. Such secondary batteries are used in the form of a single battery or in the form of a battery pack in which a plurality of batteries are electrically connected and are packed as a one unit, according to the type of an external device in which batteries are used.

Small-sized devices such as mobile phones operate with output and capacity of a single battery for a predetermined amount of time. On the other hand, battery packs are usually used in medium- or large-sized devices such as mobile devices such as notebook computers or camcorders, motor-operated bicycles with large power consumption, motor scooters, electric motor vehicles, and hybrid electric motor vehicles that need to be driven with high power for a long time, due to the problem of output and capacity of a battery. Battery packs are capable of increasing an output voltage or an output current according to the number of batteries embedded in the battery packs. In such battery packs, a plurality of batteries are embedded therein, and a charge and/or discharge operation is performed with large current. Thus, appropriate heat dissipation measures for preventing the batteries from being overheated are urgently needed.

### SUMMARY

The present invention sets out to solve the above mentioned problems of the prior art. Accordingly, the invention provides a battery pack as set out in Claim 1. Preferred features of the invention are set out in the dependent claims.

Additional aspects will be set forth in part in the description which follows and, in part, will be apparent from the description, or may be learned by practice of the presented embodiments.

### BRIEF DESCRIPTION OF THE DRAWINGS

The above and/or other aspects of the invention will become apparent and more readily appreciated from the following description of the embodiments of the invention, taken in conjunction with the accompanying drawings of which:

FIG. 1 is an exploded perspective view of a battery pack according to an embodiment of the present invention;

FIG. 2 is a perspective view of a holder case of the battery pack shown in FIG. 1;

FIG. 3 is an enlarged perspective view of main portions of the holder case shown in FIG. 2;

FIG. 4 is a perspective view of an assembled battery pack;

FIG. 5 is a perspective view of main portions of the holder case of FIG. 3 according to a modified embodiment of the present invention; and

FIG. 6 is an extracted perspective view of main portions of the holder case of FIG. 3 according to another modified embodiment of the present invention.

### DETAILED DESCRIPTION

Reference will now be made in detail to embodiments of the invention, examples of which are illustrated in the accompanying drawings, wherein like reference numerals refer to the like elements throughout. In this regard, the present embodiments may have different forms and should not be construed as being limited to the descriptions set forth herein. Accordingly, the embodiments are merely described below, by referring to the figures, to explain aspects of the present description.

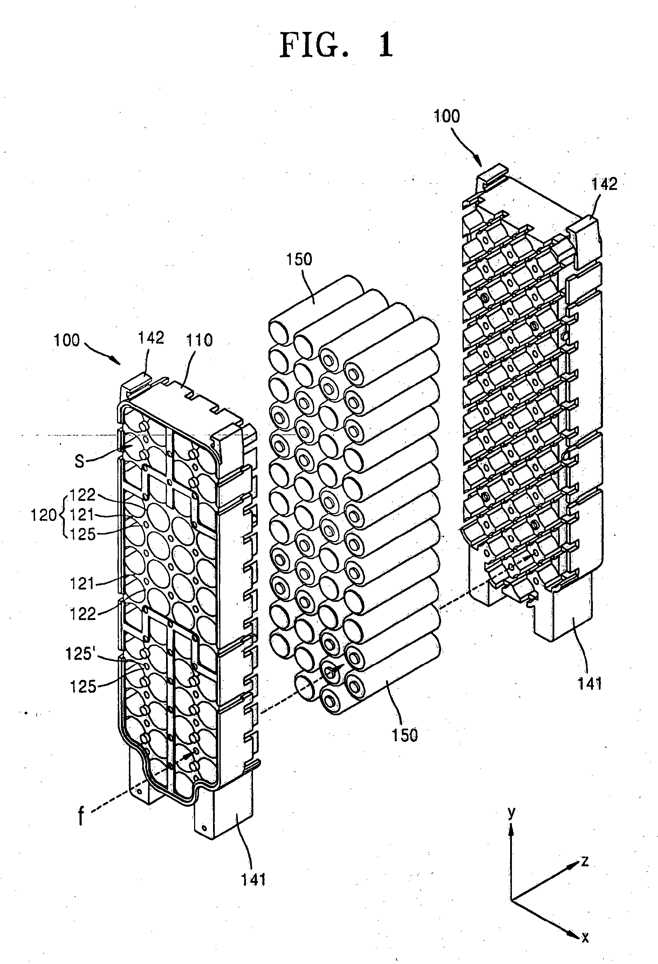

FIG. 1 is an exploded perspective view of a battery pack according to an embodiment of the present invention. The battery pack according to the present embodiment includes a pair of holder case portions 100 that face each other so as to define a holder case, and a plurality of batteries 150 that are accommodated in the pair of holder case portions 100.

Each of the holder case portions 100 is symmetrical with the other holder case portion 100 that forms the pair. When the plurality of batteries 150 are interposed between the holder case portions 100, one holder case portions 100 is combined with the other holder case portion 100 in a z-direction. Throughout the present specification, an inside of the holder case portion 100 is referred to as a side that faces the other holder case portion 100, and an outside of the holder case portion 100 is referred to as a side that is opposite to the other holder case portion 100. The holder case portions 100 that form the pair are symmetrical with each other at a position of assembling of each of the batteries 150, and combination portions of the holder case portions 100 are complementary so that they engaged with one another.

Each holder case portion 100 includes a frame 110 that forms an outline of the holder case 100, and ribs 120 that are formed with the frame 110 as a single body and separate the batteries 150 from one another. The ribs 120 define a plurality of cells S in which the batteries 150 are accommodated so that the batteries 150 are embedded in the battery pack in a plurality of columns at regular intervals. Each cell S is in the form of a hole that perforates the holder case portion 100. In this embodiment, the ribs 120 provide a circular support surface so as to encompass the circumference of the circular batteries 150. The ribs 120 include first ribs 121 that extend in a horizontal direction (x-direction), second ribs 122 that extend in a vertical direction (y-direction), and a plurality of columnar structures formed in a portion in which the first and second ribs 121 and 122 cross each other. In this embodiment the columnar structures take the form of separation columns 125, but other structures having more generally column-like characteristics are possible.

A plurality of heat dissipation holes 125' that form an air path are formed along the separation columns 125. In this embodiment, each heat dissipation hole 125' has a circular cross-sectional shape and perforates each separation column 125 throughout the overall length of the separation column 125. An air flow f of the heat dissipation holes 125' proceeds in spaces between the neighboring batteries 150, and heat generated due to a charge and/or discharge operation is dissipated by the air flow f of the heat dissipation holes 125'. The air flow f induced along the heat dissipation holes 125' may be generated naturally or may be forced due to external wind and may allow heat dissipation to be performed by natural or forced convection. For example, a cooling fan (not shown) that ventilates cooling air into the heat dissipation hole 125' may be disposed outside the holder case 100.

The first ribs 121 extend in the horizontal direction (x-direction) and connect the separation columns 125 arranged in the horizontal direction (x-direction), and the second ribs 122 extend in the vertical direction (y-direction) and connect the separation columns 125 arranged in the vertical direction (y-direction). The neighboring separation columns 125 are supported via the first and second ribs 121 and 122.

The first and second ribs 121 and 122 and the separation columns 125 are connected to one another so that cylindrical cells S that encompass the entire circumference of the batteries 150 are defined. As such, direct thermal contact between the neighboring batteries 150 is prevented, and the neighboring batteries 150 can be prevented from being consecutively heated in an abnormal operating environment in which a certain battery 150 is overheated. For example, the holder case portions 100 may be formed as a single body and may be formed of plastics having an excellent processing property and an excellent adiabatic property.

The separation columns 125 are connected to one another via the first and second ribs 121 and 122 and thus provide structural rigidity at the outside of the holder case portions 100. On the other hand, the first and second ribs 121 and 122 are excluded at the inside of the holder case 100 so that a portion of the surface of the batteries 150 is directly exposed to the low temperature air. This will be described in detail.

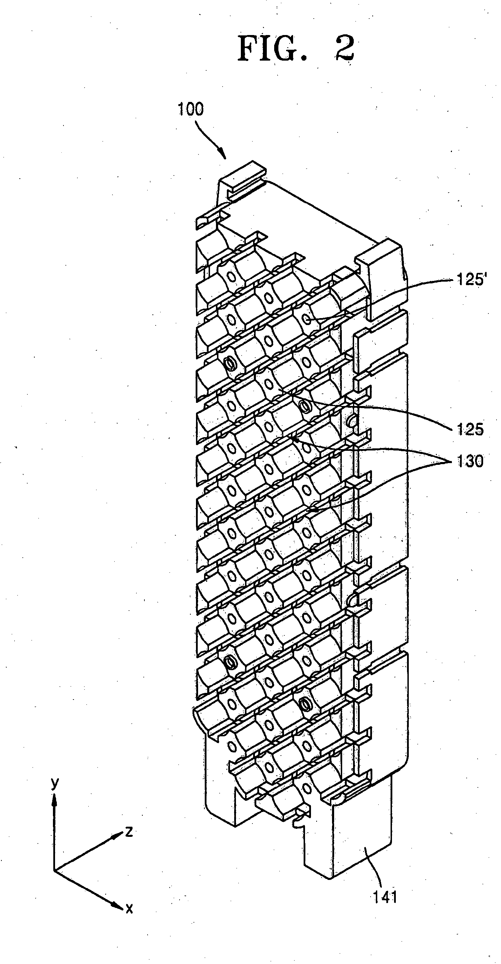

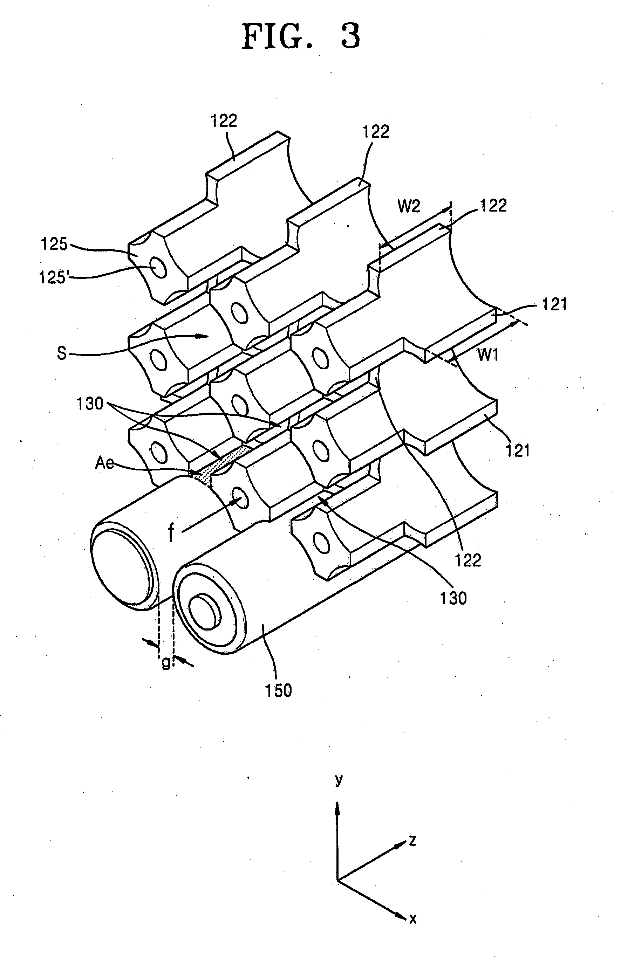

FIG. 2 is a perspective view of a holder case portion of the battery pack shown in FIG. 1, and FIG. 3 is an enlarged perspective view of elements of the holder case portion shown in FIG. 2. Referring to FIGS. 2 and 3, the separation columns 125 are arranged in the horizontal and vertical directions (x- and y-directions), and air gaps 130 through which the surfaces of the batteries 150 are exposed, are formed between the separation columns 125. The air gaps 130 are formed by partially excluding the first and second ribs 121 and 122 between the separation columns 125 (see FIG. 3). From FIG. 3, it can be seen that the air gaps extend between axial portions of the separation columns 125 and the ribs 121, 122 extend between different axial portions of the separations. The separation columns 125 are thus partially separated from one another by the air gaps 130 formed therebetween and are maintained in an isolated state. From FIG. 3, it will be seen more clearly that the separation columns 125 have a generally cruciform cross-section, albeit with somewhat rounded junctions between the 'arms' of the cross.

A surface Ae of the battery 150 exposed through the air gap 130 directly contacts the low temperature air so that heat dissipation may be performed by convection and heat accumulation of the batteries 150 due to a charge and/or discharge operation may be prevented. The first and second ribs 121 and 122 encompass the circumference of the batteries 150 at the outside (+z-direction) of the holder case 100 and extend in the inside direction (-z-direction) of the holder case 100 by widths W1 and W2 of the first and second ribs 121 and 122.

The depths W1 and W2 of the first and second ribs 121 and 122 are related to the exposed areas of the batteries 150. In other words, as the depths W1 and W2 of the first and second ribs 121 and 122 are increased, the surfaces Ae of the batteries 150 are covered to a greater extent by the first and second ribs 121 and 122 and thus, the exposed surfaces Ae of the batteries 150 are decreased. On the contrary, when the depths W1 and W2 of the first and second ribs 121 and 122 are decreased, the air gaps 130 are increased and thus, the exposed surfaces Ae of the batteries 150 are increased. By selecting the depths W1 and W2 of the first and second ribs 121 and 122, the extent of the exposed surfaces Ae of the batteries 150 may be controlled, and as the exposed surfaces Ae of the batteries 150 are increased, heat dissipation may be expedited. When the exposed surfaces Ae of the batteries 150 are excessively increased, thermal contact between the neighboring batteries 150 may occur, and the neighboring batteries 150 can be consecutively heated and deteriorated in an abnormal operating environment in which the batteries 150 may become overheated. Thus, the exposed surfaces Ae of the batteries 150 should be designed to an appropriate size.

A separation gap **g** between adjacent batteries 150 that are arranged in a designated position at regular intervals may be defined. When the separation gap **g** is defined as the shortest distance from a curvature point to another curvature point between the neighboring batteries 150, the separation gap **g** of at least 2 mm or more may be selected in view of heat dissipation efficiency. The separation gap **g** is selected in this way so that thermal contact between neighboring batteries 150 can be prevented, consecutive deterioration can be prevented, a predetermined quantity of air in the separation gap **g** may be obtained and heat dissipation may be expedited.

A heat dissipation hole 125' that forms an air path is formed along each separation column 125. Four batteries 150 are disposed around each heat dissipation hole 125' so as to be symmetrical with one another, and heat generated in each battery 150 arranged around the heat dissipation hole 125' is dissipated by an air flow **f** of the heat dissipation hole 125'. Meanwhile, each cell S in which each battery 150 is accommodated, is defined by the four neighboring separation columns 125 in the horizontal and vertical directions (x-and y-directions). The lateral surfaces of the separation columns 125 are formed so as to encompass the cylindrical batteries 150.

Each battery 150 to be accommodated in the holder case may be a secondary battery that may be charged and/or discharged, such as a lithium ion secondary battery having excellent output and capacity. Besides, a nickel-cadmium secondary battery, a nickel-hydrogen secondary battery, a lithium battery, etc. may be used. The batteries 150 are charged or discharged with large current of 1000 mA or more, for example, 1800 mA. According to a heat dissipation structure that is suggested to prevent temperature increase and deterioration or malfunction caused by a charge and/or discharge operation, heat generated in each battery 150 is dissipated via the air flow **f** of the heat dissipation hole 125'. In this case, the exposed surface Ae of the battery 150 through the air gap 130 formed between the separation columns 125 directly contacts the air so that heat dissipation may be expedited.

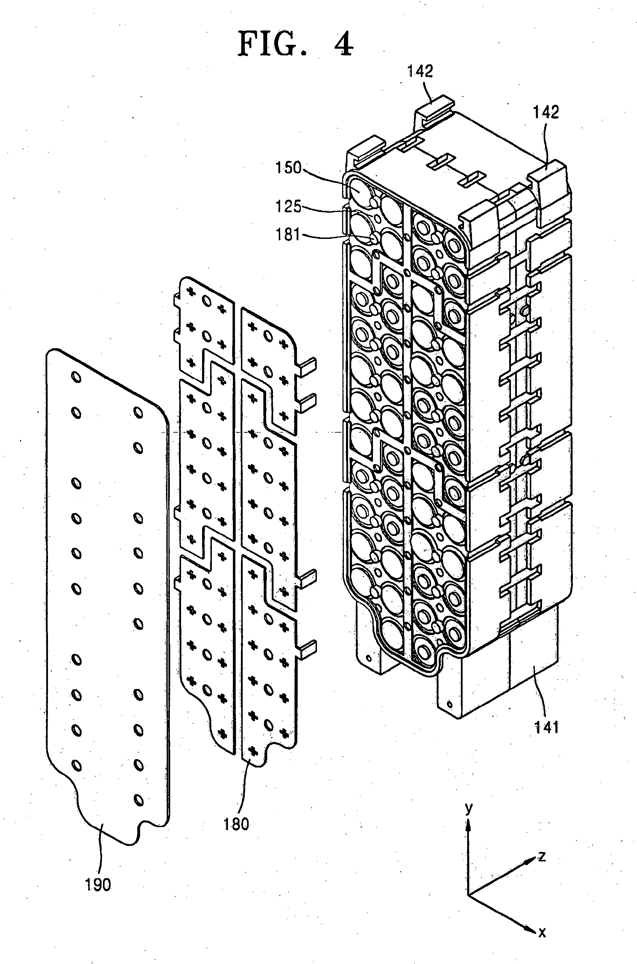

FIG. 4 is a perspective view of an assembled battery pack. Referring to FIG. 4, the pair of holder case portions 100 are assembled to face each other when the batteries 150 are interposed therebetween. In this case, the batteries 150 are disposed in positions of cells S defined in the holder case portions 100 at regular intervals. A lead plate 180 is disposed outside the holder case portion 100 and connects the batteries 150 embedded in the battery pack in series and/or in parallel. The lead plate 180 is inserted in an assembly protrusion 181 that protrudes from the holder case portion 100. The assembly protrusion 181 serves as a stopper that prevents the batteries 150 accommodated in the holder case portion 100 from being pushed out of the holder case portion 100.

The lead plate 180 connects electrodes at both ends of the battery 150 in series and/or in parallel. For example, the lead plate 180 may connect five batteries 150 that are arranged in two columns in the horizontal direction (x-direction) and in three columns in the vertical direction (y-direction) in parallel and may connect parallel blocks that are stacked in the form of a multi-stage in series. The connection structure of the batteries 150 connected in series and/or in parallel or the number and arrangement of the batteries 150 that constitute parallel blocks may be changed in various ways to suit requirements. Also, the type of arrangement of the batteries 150 that constitute the battery pack is not limited thereto.

An insulating lead tape 190 is attached to an outside of the lead plate 180 so that the lead plate 180 may be electrically insulated from an external environment. The battery pack may include a circuit board (not shown) that detects the state of voltage of the battery 150 and controls a charge and/or discharge operation. The circuit board is electrically connected to the lead plate 180 that constitutes a current path, and may be connected to the lead plate 180 via a lead line (not shown) drawn out from the circuit board. The circuit board detects the state of voltage of each battery 150 and provides a charge current via the lead plate 180.

Leg members 141 and 142 that support the battery pack in an upright position are disposed at upper and lower ends of the holder case portion 100. The leg members 141 and 142 are disposed at the right and left sides of the holder case portion 100, and the battery pack may be maintained in a stable upright position by the leg members 141 and 142 disposed in four symmetrical points of the holder case.

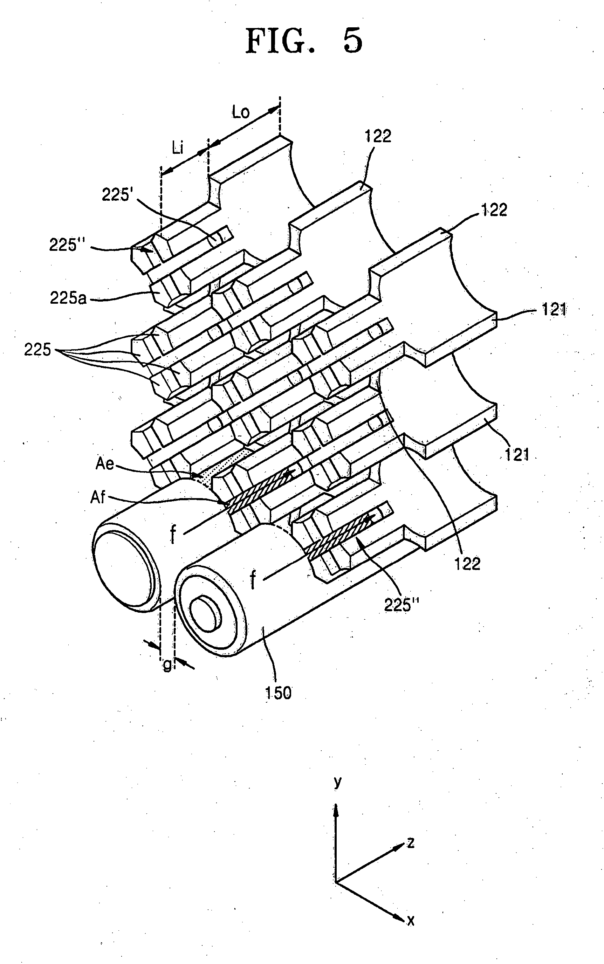

FIG. 5 is a perspective view of main portions of a holder case according to an alternative embodiment of the present invention. This view corresponds to FIG. 3 of the previous embodiment.

Referring to FIG. 5, a plurality of heat dissipation holes 225' are formed in the center of a plurality of separation columns 225, and the separation columns 225 are each divided in a lengthwise direction (z-direction) so as to form sub-columns 225a. In this embodiment, each separation column 225 of FIG. 5 includes four sub-columns 225a. In this case, a plurality of sub-gaps 225" are interposed between the sub-columns 225a so that the sub-columns 225a are separated from one another.

A partial surface Af of each battery 150 directly contacts an air flow **f** of each heat dissipation hole 225' via each sub-gap 225". The partial surface Af of the battery 150 therefore directly contacts the air flow **f** of a respective heat dissipation hole 225' so that heat dissipation efficiency may be improved. Heat dissipated from the partial surface Af of the battery 150 may be directly dissipated by the air flow **f** of the heat dissipation hole 225'.

For example, in FIG. 3, heat dissipated from the surface Ae of the battery 150 is transferred to the air flow **f** of the heat dissipation hole 125' via the separation columns 125. The separation columns 125 are interposed on a heat dissipation path so that thermal resistance of the heat dissipation path may be increased. In FIG. 5, the sub-gaps 225" are formed in the separation columns 225 including the heat dissipation holes 225' so that the separation columns 225 may be at least partially excluded from the heat dissipation path and heat dissipated from the partial surface Af of the battery 150 may be directly dissipated by the air flow **f** of the heat dissipation hole 225' and heat dissipation efficiency may be improved.

The sub-groups 225" may alternatively be formed throughout the overall length of the separation columns 225 but in this embodiment that formed only in an axial portion of the length of the separation columns 225. More specifically, the sub-gaps 225" are formed at an outside axial portion Lo of the separation column 225 but are formed at an inside axial portion Li of the separation column 225. In this case, the separation columns 225 have an undivided hollow shape at their outside portion Lo and have a shape in which the separation column 225 is divided into the four sub-columns 225a, at the inside portion Li of the separation column 225. In consideration of heat dissipation efficiency and mechanical strength of the holder case portion 100, the outside portion Lo and the inside portion Li of the separation column 225 are designed to appropriate lengths.

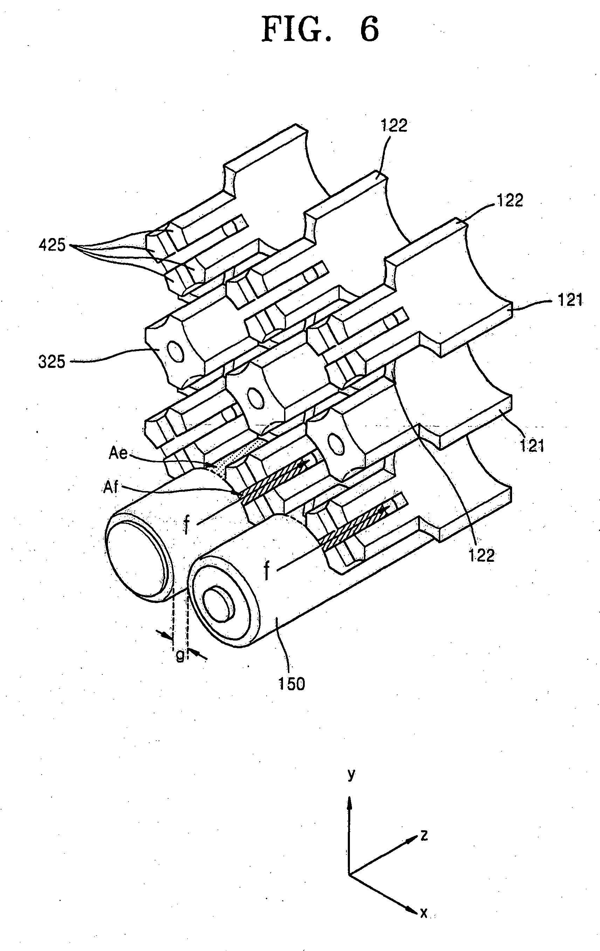

FIG. 6 is an extracted perspective view of main portions of a holder case according to another alternative embodiment of the present invention. In this embodiment, both a plurality of first separation columns 325 having an undivided hollow shape, and a plurality of second separation columns 425 having a shape in which each separation column 425 has divided into sub-columns, are used in the holder case of FIG. 6. The arrangement and number of the first and second separation columns 325 and 425 are not limited thereto and may be designed in consideration of the distribution of the quantity of the entire heat of the holder case.

It should be understood that the embodiments described herein should be considered in a descriptive sense only and not for purposes of limitation. Descriptions of features or aspects within each embodiment should typically be considered as available for other similar features or aspects in other embodiments.

## Claims

1. A battery pack comprising:
a holder case (100); and
a plurality of batteries (150) arranged within the holder case (100) with their respective first axes aligned substantially parallel to each other;
wherein the holder case (100) comprises:
a plurality of columnar structures (125 or 225), each said columnar structure (125) being located intermediate at least two said batteries (150) and aligned substantially parallel to the said first axes of the said batteries; and
a plurality of ribs (121 or 122) connecting the said columnar structures (125 or 225) in a first direction;
wherein each said columnar structure (125 or 225) serves to define at least one heat dissipation channel (125' or 225') between batteries adjacent thereto, and wherein the said ribs (121 or 122) extend between first axial portions of the columnar structures (125 or 225) but not second axial portions of the columnar structures (125 or 225), so as to define air gaps (130) between the said second axial portions, and
**characterised in that** at least some of the columnar structures (125 or 225) each comprise a respective column portion provided with a heat dissipation hole (125' or 225') extending longitudinally therethrough in order to define a said heat dissipation channel (125' or 225').

2. A battery pack according to claim 1, wherein the batteries (150) are elongate and the first axes are longitudinal axes.

3. A battery pack according to claim 1 or 2, wherein the columnar structures (125 or 225) have a substantially cruciform cross-section along at least a part of their length.

4. A battery pack according to any preceding claim further comprising a plurality of ribs (121 or 122) connecting the said columnar structures (125 or 225) in a second direction that is substantially perpendicular to the first direction.

5. A battery pack according to any preceding claim, wherein the said first axial portions are closer to an outer surface of the holder case than the second axial portions.

6. A battery pack according to any preceding claim, wherein at least some of the columnar structures (125 or 225) each comprise a respective divided portion formed from a plurality of mutually spaced and parallel sub-columns aligned substantially parallel to the said first axes of the said batteries and arranged such that at least one gap between the sub columns extends to an edge of the divided portion.

7. A battery pack according to any one of claims 1 to 6, wherein at least some of the columnar structures (125 or 225) comprise both a respective column portion and a respective divided portion.

8. A battery pack according to claim 7, wherein the said respective divided portion is located closer to the inside of the battery pack than the respective column portion.

9. A battery pack according to claim 6, 7 or 8, wherein each said divided portion comprises four sub-columns.

10. A battery pack according to any preceding claim, wherein the holder case (100) comprises a first case portion and a second case portion, the said case portions being arranged together in a mutually facing configuration, such that respective said columnar structures (125 or 225) in each said case portion project towards the other said case portion.

11. A battery pack according to any preceding claim, comprising a lead plate (180) located on an outer surface of the said holder case (100) and electrically connecting a plurality of the batteries (150) to each other.

12. A battery pack according to any preceding claim comprising a plurality of leg members (141) for supporting the battery pack in an upright position.

## Patentansprüche

1. Batteriepack, der aufweist:
ein Haltergehäuse (100); und
eine Vielzahl von Batterien (150), die innerhalb des Haltergehäuses (100) angeordnet sind, wobei ihre jeweiligen ersten Achsen im Wesentlichen parallel zueinander ausgerichtet sind;
wobei das Haltergehäuse (100) aufweist:
eine Vielzahl von säulenförmigen Strukturen (125 oder 225), wobei eine jede säulenförmige Struktur (125) zwischen mindestens zwei der Batterien (150) angeordnet und im Wesentlichen parallel zu den ersten Achsen der Batterien ausgerichtet ist; und
eine Vielzahl von Rippen (121 oder 122), die die säulenförmigen Strukturen (125 oder 225) in einer ersten Richtung verbinden;
worin eine jede säulenförmige Struktur (125 oder 225) dazu dient, mindestens einen Wärmeableitungskanal (125' oder 225') zwischen den dazu benachbarten Batterien zu definieren, und wobei sich die Rippen (121 oder 122) zwischen den ersten axialen Abschnitten der säulenförmigen Strukturen (125 oder 225) erstrecken, aber nicht den zweiten axialen Abschnitten der säulenförmigen Strukturen (125 oder 225), um so Luftspalte (130) zwischen den zweiten axialen Abschnitten zu definieren, und
**dadurch gekennzeichnet, dass** mindestens einige der säulenförmigen Strukturen (125 oder 225) jeweils einen entsprechenden Säulenabschnitt aufweisen, der mit einem Wärmeableitungsloch (125' oder 225') versehen ist, das sich in Längsrichtung dort hindurch erstreckt, um den Wärmeableitungskanal (125' oder 225') zu definieren.

2. Batteriepack nach Anspruch 1, bei dem die Batterien (150) länglich sind und die ersten Achsen Längsachsen sind.

3. Batteriepack nach Anspruch 1 oder 2, bei dem die säulenförmigen Strukturen (125 oder 225) einen im Wesentlichen kreuzförmigen Querschnitt entlang mindestens eines Teils ihrer Länge aufweisen.

4. Batteriepack nach einem der vorhergehenden Ansprüche, der außerdem eine Vielzahl von Rippen (121 oder 122) aufweist, die die säulenförmigen Strukturen (125 oder 225) in einer zweiten Richtung verbinden, die im Wesentlichen senkrecht zur ersten Richtung verläuft.

5. Batteriepack nach einem der vorhergehenden Ansprüche, bei dem die ersten axialen Abschnitte näher an einer Außenfläche des Haltergehäuses sind als die zweiten axialen Abschnitte.

6. Batteriepack nach einem der vorhergehenden Ansprüche, bei dem mindestens einige der säulenförmigen Strukturen (125 oder 225) jeweils einen entsprechenden geteilten Abschnitt aufweisen, der aus einer Vielzahl von gegenseitig beabstandeten und parallelen Untersäulen gebildet wird, die im Wesentlichen parallel zu den ersten Achsen der Batterien ausgerichtet und so angeordnet sind, dass sich mindestens ein Spalt zwischen den Untersäulen bis zu einem Rand des geteilten Abschnittes erstreckt.

7. Batteriepack nach einem der Ansprüche 1 bis 6, bei dem mindestens einige der säulenförmigen Strukturen (125 oder 225) sowohl einen jeweiligen Säulenabschnitt als auch einen jeweiligen geteilten Abschnitt aufweisen.

8. Batteriepack nach Anspruch 7, bei dem der jeweilige geteilte Abschnitt näher an der Innenseite des Batteriepacks angeordnet ist als der jeweilige Säulenabschnitt.

9. Batteriepack nach Anspruch 6, 7 oder 8, bei dem ein jeder geteilte Abschnitt vier Untersäulen aufweist.

10. Batteriepack nach einem der vorhergehenden Ansprüche, bei dem das Haltergehäuse (100) einen ersten Gehäuseabschnitt und einen zweiten Gehäuseabschnitt aufweist, wobei die Gehäuseabschnitte zusammen in einer gegenseitig zueinander hin liegenden Konfiguration angeordnet sind, so dass die jeweiligen säulenförmigen Strukturen (125 oder 225) in jedem Gehäuseabschnitt in Richtung des anderen Gehäuseabschnittes vorstehen.

11. Batteriepack nach einem der vorhergehenden Ansprüche, der eine Leitungsplatte (180) aufweist, die auf einer Außenfläche des Haltergehäuses (100) angeordnet ist und eine Vielzahl von Batterien (150) miteinander elektrisch verbindet.

12. Batteriepack nach einem der vorhergehenden Ansprüche, der eine Vielzahl von Beinelementen (141) für das Tragen des Batteriepacks in einer aufrechten Position aufweist.

## Revendications

1. Bloc-batterie comprenant :
un boîtier de retenue (100) ; et
une pluralité de batteries (150) agencées au sein du boîtier de retenue (100) avec leurs premiers axes respectifs alignés de manière essentiellement parallèle les uns aux autres ;
dans lequel le boîtier de retenue (100) comprend :
une pluralité de structures colonnaires (125 ou 225), chaque structure colonnaire (125) étant située entre au moins deux desdites batteries (150) et alignée de manière essentiellement parallèle auxdits premiers axes desdites batteries ; et
une pluralité de nervures (121 ou 122) raccordant lesdites structures colonnaires (125 ou 225) dans une première direction ;
dans lequel chaque structure colonnaire (125 ou 225) sert à définir au moins un canal de dissipation de chaleur (125' ou 225') entre des batteries adjacentes à celle-ci, et dans lequel lesdites nervures (121 ou 122) s'étendent entre des premières parties axiales des structures colonnaires (125 ou 225) mais pas entre des secondes parties axiales des structures colonnaires (125 ou 225), de manière à définir des espaces vides (130) entre lesdites secondes parties axiales, et
**caractérisé en ce qu'**au moins certaines des structures colonnaires (125 ou 225) comprennent chacune une partie de colonne de respective munie d'un trou de dissipation de chaleur (125' ou 225') s'étendant de manière longitudinale à travers celle-ci afin de définir ledit canal de dissipation de chaleur (125' ou 225').

2. Bloc-batterie selon la revendication 1, dans lequel les batteries (150) sont de forme allongée et les premiers axes sont des axes longitudinaux.

3. Bloc-batterie selon la revendication 1 ou 2, dans lequel les structures colonnaires (125 ou 225) présentent une section transversale essentiellement cruciforme le long d'au moins une partie de leur longueur.

4. Bloc-batterie selon l'une quelconque des revendications précédentes, comprenant en outre une pluralité de nervures (121 ou 122) raccordant lesdites structures colonnaires (125 ou 225) dans une seconde direction qui est essentiellement perpendiculaire à la première direction.

5. Bloc-batterie selon l'une quelconque des revendications précédentes, dans lequel lesdites premières parties axiales sont plus proches d'une surface extérieure du boîtier de retenue que les secondes parties axiales.

6. Bloc-batterie selon l'une quelconque des revendications précédentes, dans lequel au moins certaines des structures colonnaires (125 ou 225) comprennent chacune une partie divisée respective formée à partir d'une pluralité de sous-colonnes mutuellement espacées et parallèles alignées de manière essentiellement parallèle avec lesdits premiers axes desdites batteries et agencées de telle manière qu'au moins un espace entre les sous-colonnes s'étend jusqu'à un bord de la partie divisée.

7. Bloc-batterie selon l'une quelconque des revendications 1 à 6, dans lequel au moins certaines des structures colonnaires (125 ou 225) comprennent à la fois une partie de colonne respective et une partie divisée respective.

8. Bloc-batterie selon la revendication 7, dans lequel ladite partie divisée respective est située plus proche de l'intérieur du bloc-batterie que la partie de colonne respective.

9. Bloc-batterie selon l'une quelconque des revendications 6, 7 ou 8, dans lequel chaque partie divisée comprend quatre sous-colonnes.

10. Bloc-batterie selon l'une quelconque des revendications précédentes, dans lequel le boîtier de retenue (100) comprend une première partie de boîtier et une seconde partie de boîtier, lesdites parties de boîtiers étant agencées en une configuration où elles se regardent mutuellement, de telle manière que lesdites structures colonnaires respectives (125 ou 225) de chaque partie de boitier fait saillie en direction de l'autre partie boîtier.

11. Bloc-batterie selon l'une quelconque des revendications précédentes, comprenant une plaque conductrice (180) située sur une surface extérieure dudit boîtier de retenue (100) et raccordant électriquement une pluralité de batteries (150) les unes aux autres.

12. Bloc-batterie selon l'une quelconque des revendications précédentes, comprenant une pluralité d'éléments formant pied (141) permettant de supporter les blocs-batteries en une position verticale.
